(19) **Europäisches Patentamt / European Patent Office / Office européen des brevets**

(11) **EP 1 375 212 B1**

(12) **FASCICULE DE BREVET EUROPEEN**

(45) Date de publication et mention de la délivrance du brevet:
**09.07.2008 Bulletin 2008/28**

(51) Int Cl.:
***B60H 1/00*** *(2006.01)*

(21) Numéro de dépôt: **03291582.9**

(22) Date de dépôt: **27.06.2003**

(54) **Procédé et dispositif de commande de débit d'un appareil de climatisation de véhicule**

Verfahren und Vorrichtung zur Steuerung von Flüssen für eine Fahrzeugklimaanlage

Flow control method and device for a vehicle air conditioner

(84) Etats contractants désignés:
**BE DE ES FR GB IT**

(30) Priorité: **27.06.2002 FR 0208015**

(43) Date de publication de la demande:
**02.01.2004 Bulletin 2004/01**

(73) Titulaire: **RENAULT S.A.S.**
**92100 Boulogne Billancourt (FR)**

(72) Inventeur: **L'Huillier, Jean-Marie**
**92130 Issy-les-Molineaux (FR)**

(56) Documents cités:
**EP-A- 0 495 201    EP-A- 1 106 405**
**EP-A- 1 323 555    US-A- 4 665 971**
**US-A- 5 813 600**

- **PATENT ABSTRACTS OF JAPAN vol. 013, no. 153 (M-813), 13 avril 1989 (1989-04-13) & JP 63 312218 A (NISSAN MOTOR CO LTD), 20 décembre 1988 (1988-12-20)**

**Description**

L'invention concerne la commande de la régulation de débit d'un appareil de climatisation de véhicule avec, en particulier, une régulation du débit des sorties dans l'habitacle du véhicule.

Un appareil de climatisation automatique comporte en amont un groupe moto-ventilateur, et en aval plusieurs conduits associés à des volets d'obturation de positions réglables. Cet appareil est également associé à un tableau de commande pour, notamment, la température.

En général, le réglage de la position des volets et de la tension du groupe moto-ventilateur est effectué à partir de tables mémorisées en prenant en compte divers paramètres tels que l'ensoleillement, la température extérieure, la température de l'habitacle. La position des volets est représentative par exemple de la priorité donnée à un ou plusieurs conduits par exemple le conduit de dégivrage et/ou le conduit des aérateurs centraux par rapport au conduit de diffusion vers les pieds. Le document EP 0 495 201 qui est considéré comme l'état de la technique le plus proche, décrit un tel dispositif de commande.

Le changement de position d'un des volets entraîne en général une modification des débits sur chacune des sorties de l'appareil par modification de la perte de charge des conduits et des sections équivalentes.

L'invention a pour but de proposer une stratégie de commande de débit pour une climatisation, permettant d'avoir une bonne prestation dans toutes les zones du véhicule.

L'invention a également pour but d'avoir une commande de climatisation qui permette le réglage indépendant des débits de chacune des sorties.

Un autre but de l'invention est de proposer une facilité de mise au point du réglage des débits d'air des sorties.

Pour atteindre ces buts, l'invention propose de façon générale de travailler avec des variables représentant la section équivalente pour chaque conduit. La vitesse du groupe moto-ventilateur et la position des volets sont alors gérées en rapport avec ces sections équivalentes.

L'invention propose de contrôler le débit de chaque conduit de façon indépendante.

L'invention propose que le calcul des sections équivalentes affectées aux différents conduits est fonction d'une demande de répartition.

Selon un mode de mise en oeuvre de l'invention, la commande à partir des sections équivalentes affectées aux différents conduits est fonction d'une demande de répartition comportant une commande de débit propre d'un tableau de commande arrière.

Plus précisément, l'invention propose de baser la commande sur un calcul dit « de densité », de calculer la section équivalente pour chacune des sorties en fonction de ladite densité, et de déterminer la tension nécessaire pour le groupe moto-ventilateur.

Plus généralement, l'invention propose un procédé de commande de débit d'un appareil de climatisation comportant en amont un groupe moto-ventilateur, et en aval plusieurs conduits associés à des volets de positions réglables.

Selon une caractéristique générale de l'invention, on contrôle les positions des volets, par exemple d'obturation ou d'aiguillage, et la vitesse du groupe moto-ventilateur à partir des sections équivalentes affectées aux différents conduits.

Selon un mode de mise en oeuvre de l'invention, le calcul des sections équivalentes comporte un calcul de densités des conduits.

Le calcul des sections équivalentes comporte par exemple un calcul des densités de chaque conduit, la détermination du conduit ayant la densité la plus élevée, le calcul des sections équivalentes en fonction de sections équivalentes maximales et d'une demande de répartition.

On applique avantageusement une ouverture maximale au volet associé au conduit présentant la plus forte densité, et on règle la position de chacun des volets associés aux autres conduits en fonction de la demande de répartition.

L'invention a également pour objet un dispositif de commande de débit d'un appareil de climatisation, comportant en amont un groupe moto-ventilateur, et en aval plusieurs conduits associés à des volets de positions réglables.

Selon une caractéristique générale de l'invention, le dispositif de commande comporte des moyens d'élaboration aptes à calculer les sections équivalentes affectées aux différents conduits, et des moyens de contrôle des positions des volets et de la vitesse du groupe moto-ventilateur à partir desdites sections équivalentes.

Selon un mode de réalisation de l'invention, les moyens d'élaboration comportent des premiers moyens de calcul de densités des conduits.

Selon un mode de réalisation de l'invention, les moyens d'élaboration comportent en outre des moyens de détermination du conduit ayant la densité la plus élevée, et des deuxièmes moyens de calcul aptes à calculer les sections équivalentes en fonction de sections équivalentes maximales et d'une demande de répartition.

Les moyens de contrôle sont avantageusement aptes à appliquer une ouverture maximale au volet associé au conduit présentant la plus forte densité, et à régler la position de chacun des volets associés aux autres conduits en fonction de la demande de répartition.

Selon un mode de réalisation de l'invention, les moyens d'élaboration sont aptes à calculer les sections équivalentes affectées aux différents conduits en fonction d'une demande de répartition d'un tableau arrière de commande de débit propre.

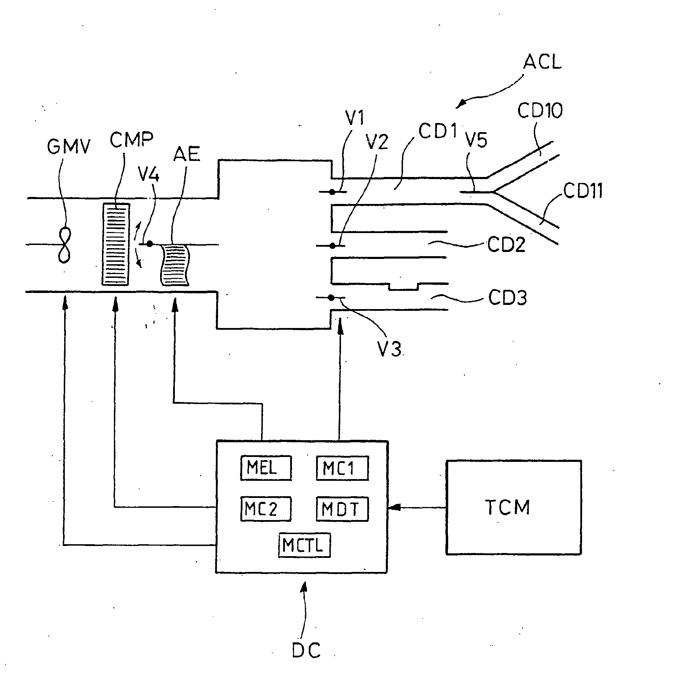

D'autres avantages et caractéristiques de l'invention apparaîtront à l'examen de la description détaillée d'un mode de réalisation et de mise en oeuvre, nullement limitatif, et du dessin annexé, sur lequel la figure unique représente très schématiquement un mode de réalisation d'un appareil de climatisation incorporant un dispositif de commande selon l'invention.

Sur la figure, l'appareil de climatisation ACL comporte en amont un groupe moto-ventilateur GMV, un évaporateur CMP, un aérotherme AE et, ici, trois conduits de sortie disposés en aval et référencés CD1, CD2 et CD3. Le conduit CD1 est par exemple le conduit avant, le conduit CD2 le conduit «pieds» et le conduit CD3 le conduit ventilation arrière.

Chaque conduit est associé à un volet d'obturation V1-V3 dont la position est réglable.

Il est également prévu un volet V4 de mixage de la température habitacle et un volet d'aiguillage V5 entre un conduit de dégivrage CD10 et un conduit CD11 vers les aérateurs centraux.

Cet appareil de climatisation comporte également un tableau de commande utilisateur TCM permettant à l'utilisateur d'actionner les commandes de dégivrage, par exemple. Généralement, ce tableau de commande est formé d'un tableau principal avant, mais il peut également comporter éventuellement un tableau arrière avec une commande de débit propre. Dans ce dernier cas, une demande de débit supplémentaire du conduit de ventilation arrière par des passagers arrière actionnant le tableau de commande arrière ne doit pas perturber la répartition souhaitée pour les conduits avant.

Il est également prévu un dispositif de commande de débit de l'appareil de climatisation, ce dispositif de commande étant référencé DC.

Ce dispositif de commande permet de contrôler les positions des volets d'obturation ou d'aiguillage et la vitesse du groupe moto-ventilateur à partir des sections équialentes affectées aux différents conduits.

Ce dispositif de commande comporte des moyens d'élaboration MEL, des premier et deuxième moyens de calcul MC1 et MC2, des moyens de détermination MDT et des moyens de contrôle MCTL. Ces différents moyens peuvent être par exemple réalisés de façon logicielle au sein d'un microprocesseur et/ou sous la forme d'un circuit intégré.

Les moyens d'élaboration MEL calculent les sections équivalentes (SE) affectées aux différents conduits. Le calcul de ces vsections équivalentes (SE) s'effectue en trois étapes:

- on calcule tout d'abord les densités de chaque conduit, la densité d'un conduit représentant le rapport entre la demande de débit (Q1-Q3) en pourcentage du débit total et la capacité du conduit représentée par sa surface équivalente maximale (SE$_{max}$).
- on détermine ensuite, en fonction des densités, le conduit ayant la densité la plus élevée,
- puis on calcule les sections équivalentes (SE) en fonction de sections équivalentes maximales (SE$_{max}$) et de la demande de répartition (Q1-Q3) effectuée par l'utilisateur sur son tableau de commande.

Chaque conduit, en fonction de sa géométrie, c'est à dire de son diamètre de sortie, de sa forme (étranglement (conduit CD3 par exemple), ...) a une perte de charge propre (avec pour référence la perte de charge quand son volet est ouvert au maximum). Le but est, pour que la perte de charge globale de l'appareil de climatisation puisse être la plus faible possible, d'ouvrir à fond le volet d'un conduit d'une des sorties, puis de régler en fonction de la répartition souhaitée (par exemple priorité au dégivrage ou à l'aération avant ou à l'aération «pieds» et ventilation arrière, ...) le volet de chacun des conduits des autres sorties. Ceci permet d'optimiser l'acoustique et la consommation du groupe moto-ventilateur.

La densité d'un conduit représente le rapport entre la demande de débit en pourcentage et la capacité du conduit représentée par sa surface équivalente maximale.

Les surfaces équivalentes maximales des conduits «pieds» et arrière sont constantes. Elles sont directement liées à la géométrie du conduit considéré( par exemple : étranglement dans le conduit CD3). La surface équivalente maximale (SE$_{max}$) du conduit avant dépend dans un exemple de réalisation, de la position d'une came permettant de régler le dégivrage et/ou la ventilation. En effet, selon que l'on souhaite mettre plus d'air du côté dégivrage ou du côté ventilation, on change la géométrie de l'ensemble avant et donc la surface équivalente maximale. De plus, on doit prendre en compte l'hystérésis de la came pour calculer cette surface équivalente maximale en fonction de la position de la came.

Afin d'optimiser les commandes des volets de distribution en fonction de la répartition demandée, les moyens de détermination MDT vont déterminer le volet associé au conduit ayant la plus forte densité. On appliquera alors à ce volet une ouverture maximale (100%).

La répartition est celle qui permet de garantir la prestation pour les sorties (par exemple, en fonction de la température extérieure, de la température intérieure et du taux d'humidité, le système de régulation sait qu'il y a un risque de buée et choisit une priorité de dégivrage).

Les deuxièmes moyens de calcul MC2 vont calculer les variables de sections équivalentes SE de la façon suivante.

Si le conduit CD1 est celui ayant la plus forte densité, les moyens MC2 calculent les variables équivalentes SE1, SE2 et SE3, respectivement associées aux conduits CD1, CD2 et CD3, de la façon suivante:

$$SE1 = SE_{max1},$$

$$SE2 = SE_{max1} \times \% Q2 / \% Q1,$$

$$SE3 = SE_{max1} \times \% Q3 / \% Q1,$$

où % Q1, % Q2 et % Q3 désignent respectivement le pourcentage souhaité du débit du conduit correspondant (prestation).

Dans le cas où le conduit CD2 (conduit «pieds») est celui ayant la plus forte densité, le calcul des variables de sections équivalentes SE1, SE2 et SE3 s'effectue de la façon suivante

- 
$$SE2 = SE_{max2},$$

- 
$$SE1 = SE_{max2} \times \% \, Q1 \, / \, \% \, Q2,$$

- 
$$SE3 = SE_{max2} \times \% \, Q3 \, / \, \% \, Q2.$$

:

Dans le cas où le conduit CD3 est celui présentant la plus forte densité, le calcul s'effectue de la façon suivante:

- 
$$SE3 = SE_{max3},$$

- 
$$SE2 = SE_{max3} \times \% \, Q2/\% \, Q3,$$

- 
$$SE1 = SE_{max3} \times \% \, Q1/\% \, Q3.$$

$SE_{max1}$, $SE_{max2}$, $SE_{max3}$ sont des valeurs connues et mémorisées qui dépendent de la géométrie du conduit ( diamètre, longueur, ...)

La commande des trois volets d'obturation s'effectue à partir du pourcentage de surface équivalente demandé par rapport à la surface équivalente maximale du conduit considéré. Le dispositif de contrôle comporte, à cet égard, une table de mémorisation par volet.

Par ailleurs, la valeur de tension à appliquer au groupe moto-ventilateur provient d'un calcul ou bien d'une table de valeur mémorisée. Cette valeur est fonction au minimum de la somme des besoins en débit. Le calcul peut être enrichi avec les positions du ou des volets de mixage, la section équivalente globale vue par le groupe moto-ventilateur en sortie de l'appareil (différence de pression entre l'habitacle et la pression d'entrée du groupe moto-ventilateur, la perte de charge correspondant au débit total souhaité), la section interne de l'appareil de climatisation et la perte de charge en entrée du groupe moto-ventilateur.

A titre d'exemple, on prend en compte ces paramètres de la façon suivante:

- la tension à appliquer au groupe moto-ventilateur est fonction de courbes caractéristiques du groupe moto-ventilateur donnant, en fonction du débit et de la perte de charge totale de la gaine d'air, la tension à appliquer. Ce réseau de courbes est connu et intégré sous forme de table mémorisée,

- le débit total correspond à la somme des besoins en débit,

- la perte de charge est calculée en fonction de la position du ou des volets de mixage (réglage, température par rapport à l'aérotherme), des caractéristiques de sections équivalentes des conduits d'entrée, de la section équivalente des conduits de sortie, et de la position du volet de recyclage.

**Revendications**

1. Procédé de commande de débit d'un appareil de climatisation de véhicule comportant en amont un groupe moto ventilateur (GMV), et en aval plusieurs conduits (CD1, CD3) associés à des volets de positions réglables, **caractérisé par le fait qu'**on contrôle les positions des volets (V1-V3) et la vitesse du groupe moto ventilateur (GMV) en fonction de la section équivalente (SE) des différents conduits.

2. Procédé selon la revendication 1, **caractérisé par le fait qu'**on contrôle le débit de chaque conduit de façon indépendante.

3. Procédé selon l'une quelconque des revendication 1 à 2, **caractérisé par le fait que** le calcul des sections équivalentes (SE) comporte un calcul de densités des conduits, la densité d'un conduit étant le rapport entre la demande de débit pour ce conduit en pourcentage du débit total (Q1-Q3) et la capacité du conduit représentée par sa surface équivalente maximale ($SE_{max}$).

4. Procédé selon la revendication 3, **caractérisé par le fait que** le calcul des sections équivalentes (SE) comporte en outre la détermination du conduit ayant la densité la plus élevée, et le calcul des sections équivalentes (SE) en fonction de sections équivalentes maximales ($SE_{max}$) et d'une demande de répartition (Q1-Q3).

5. Procédé selon la revendication 4, **caractérisé par le fait qu'**on applique une ouverture maximale au volet associé au conduit présentant la plus forte densité, et on règle la position de chacun des volets associés aux autres conduits en fonction de la demande de répartition (Q1-Q3).

6. Procédé selon l'une quelconque des revendications précédente, **caractérisé par** le fait le contrôle des positions des volets (V1-V3) et de la vitesse du groupe moto-ventilateur (GMV) est fonction d'une demande de répartition comportant une commande de débit propre d'un tableau de commande arrière.

**7.** Procédé selon la revendication 1, **caractérisé par le fait que** le contrôle des positions des volets (V1-V3) et de la vitesse du groupe moto ventilateur (GMV) est fonction d'une demande de répartition (Q1-Q3).

**8.** Dispositif de commande de débit d'un appareil de climatisation de véhicule comportant en amont un groupe moto ventilateur (GMV), et en aval plusieurs conduits (CD) associés à des volets (V1-V3) de positions réglables, **caractérisé par le fait qu'**il comporte des moyens d'élaboration (MEL) aptes à calculer des sections équivalentes (SE) affectées aux différents conduits, et des moyens de contrôle (MCTL) des positions des volets et de la vitesse du groupe moto ventilateur à partir desdites sections équivalentes (SE).

**9.** Dispositif selon la revendication 8, **caractérisé par le fait que** les moyens d'élaboration comportent des premiers moyens de calcul de densités des conduits, la densité d'un conduit étant le rapport entre la demande de débit pour ce conduit en pourcentage du débit total (Q1-Q3) et la capacité du conduit représenté par sa surface équivalente maximale ($SE_{max}$).

**10.** Dispositif selon la revendication 9, **caractérisé par le fait que** les moyens d'élaboration comportent en outre des moyens de détermination du conduit ayant la densité la plus élevée, et des deuxièmes moyens de calcul aptes à calculer les sections équivalentes (SE) en fonctions de sections équivalentes maximales ($SE_{max}$) et d'une demande de répartition (Q1-Q3).

**11.** Dispositif selon la revendication 10, **caractérisé par le fait que** les moyens de contrôle sont aptes à appliquer une ouverture maximale au volet associé au conduit présentant la plus forte densité, et à régler la position de chacun des volets associés aux autres conduits en fonction de la demande de répartition (Q1-Q3).

**12.** Dispositif selon l'une quelconque des revendications 8 à 11, **caractérisé par le fait que** les moyens d'élaboration (MEL) sont aptes à calculer lesdites sections équivalentes (SE) affectées aux différents conduits en fonction d'une demande de répartition comportant une commande de débit propre d'un tableau de commande arrière.

**13.** Dispositif selon la revendication 8, **caractérisé par le fait que** les moyens d'élaboration (MEL) sont aptes à calculer lesdites sections équivalentes (SE) affectées aux différents conduits en fonction d'une demande de répartition (Q1-Q3).

**14.** Véhicule comportant un appareil de climatisation adapté à climatiser un habitacle dudit véhicule, **caractérisé en ce que** ledit appareil comporte un dispositif de commande de débit selon l'une quelconque des revendications 1 à 7 ou **en ce que** la commande de débit de sorties dudit appareil est contrôlée conformément à un procédé selon l'une quelconque des revendications 8 à 13.

**Claims**

**1.** Method of flow-rate control for a vehicle air-conditioning apparatus comprising upstream a motor-fan unit (MFU), and downstream several conduits (CD1, CD3) associated with flaps with adjustable positions, **characterized in that** the positions of the flaps (F1-F3) and the speed of the motor-fan unit (MFU) are controlled as a function of the equivalent cross-section (EC) of the various conduits.

**2.** Method according to Claim 1, **characterized in that** the flow rate of each conduit is controlled independently.

**3.** Method according to any one of Claims 1 to 2, **characterized in that** the calculation of the equivalent cross-sections (EC) comprises a calculation of densities of the conduits, the density of a conduit being the ratio between the flow-rate demand for this conduit as a percentage of the total flow rate (Q1-Q3) and the capacity of the conduit as represented by its maximum equivalent area ($EC_{max}$).

**4.** Method according to Claim 3, **characterized in that** the calculation of the equivalent cross-sections (EC) furthermore comprises the determination of the conduit having the highest density, and the calculation of the equivalent cross-sections (EC) as a function of maximum equivalent cross-sections ($EC_{max}$) and of a distribution demand (Q1-Q3).

**5.** Method according to Claim 4, **characterized in that** a maximum opening is applied to the flap associated with the conduit exhibiting the largest density, and the position of each of the flaps associated with the other conduits is adjusted as a function of the distribution demand (Q1-Q3).

**6.** Method according to any one of the preceding claims, **characterized in that** the control of the positions of the flaps (F1-F3) and of the speed of the motor-fan unit (MFU) is dependent on a distribution demand comprising a suitable flow-rate control of a rear control panel.

**7.** Method according to Claim 1, **characterized in that** the control of the positions of the flaps (F1-F3) and of the speed of the motor-fan unit (MFU) is dependent on a distribution demand (Q1-Q3).

8. Device for flow-rate control for a vehicle air-conditioning apparatus comprising upstream a motor-fan unit (MFU), and downstream several conduits (CD) associated with flaps (F1-F3) with adjustable positions, **characterized in that** it comprises computation means (COM) able to calculate equivalent cross-sections (EC) assigned to the various conduits, and means (MCTL) for controlling the positions of the flaps and the speed of the motor-fan unit on the basis of the said equivalent cross-sections (EC).

9. Device according to Claim 8, **characterized in that** the computation means comprise first means for calculating densities of the conduits, the density of a conduit being the ratio between the flow-rate demand for this conduit as a percentage of the total flow rate (Q1-Q3) and the capacity of the conduit as represented by its maximum equivalent area ($EC_{max}$).

10. Device according to Claim 9, **characterized in that** the computation means furthermore comprise means for determining the conduit having the highest density, and second calculation means able to calculate the equivalent cross-sections (EC) as a function of maximum equivalent cross-sections ($EC_{max}$) and of a distribution demand (Q1-Q3).

11. Device according to Claim 10, **characterized in that** the control means are able to apply a maximum opening to the flap associated with the conduit exhibiting the largest density, and to adjust the position of each of the flaps associated with the other conduits as a function of the distribution demand (Q1-Q3).

12. Device according to any one of Claims 8 to 11, **characterized in that** the computation means (COM) are able to calculate the said equivalent cross-sections (EC) assigned to the various conduits as a function of a distribution demand comprising a suitable flow-rate control of a rear control panel.

13. Device according to Claim 8, **characterized in that** the computation means (COM) are able to calculate the said equivalent cross-sections (EC) assigned to the various conduits as a function of a distribution demand (Q1-Q3) .

14. Vehicle comprising an air-conditioning apparatus adapted for air-conditioning a cabin of the said vehicle, **characterized in that** the said apparatus comprises a device for flow-rate control according to any one of Claims 1 to 7 or **in that** the control of flow rate of outlets of the said apparatus is controlled in accordance with a method according to any one of Claims 8 to 13.

**Patentansprüche**

1. Verfahren zum Steuern des Durchsatzes einer Fahrzeug-Klimaanlage, die einlassseitig eine Gebläsemotorgruppe (GMV) und auslassseitig mehrere Leitungen (CD1, CD3), denen Klappen mit einstellbaren Stellungen zugeordnet sind, aufweist, **dadurch gekennzeichnet, dass** die Stellungen der Klappen (V1-V3) und die Geschwindigkeit der Gebläsemotorgruppe (GMV) als Funktion des äquivalenten Querschnitts (SE) der verschiedenen Leitungen gesteuert werden.

2. Verfahren nach Anspruch 1, **dadurch gekennzeichnet, dass** der Durchsatz jeder Leitung auf unabhängige Weise gesteuert wird.

3. Verfahren nach einem der Ansprüche 1 bis 2, **dadurch gekennzeichnet, dass** die Berechnung der äquivalenten Querschnitte (SE) eine Berechnung der Dichten der Leitungen enthält, wobei die Dichte einer Leitung das Verhältnis zwischen der Durchsatzanforderung für diese Leitung als Prozentsatz des Gesamtdurchsatzes (Q1-Q3) und der Kapazität der Leitung, die durch ihre maximale äquivalente Fläche ($SE_{max}$) repräsentiert wird, ist.

4. Verfahren nach Anspruch 3, **dadurch gekennzeichnet, dass** die Berechnung der äquivalenten Querschnitte (SE) außerdem das Bestimmen der Leitung, die die höchste Dichte besitzt, und die Berechnung der äquivalenten Querschnitte (SE) als Funktion maximaler äquivalenter Querschnitte ($SE_{max}$) und einer Verteilungsanforderung (Q1-Q3) enthält.

5. Verfahren nach Anspruch 4, **dadurch gekennzeichnet, dass** eine Klappe, die einer Leitung zugeordnet ist, die die höchste Dichte aufweist, maximal geöffnet wird und die Stellung jeder der Klappen, die den anderen Leitungen zugeordnet sind, als Funktion der Verteilungsanforderung (Q1-Q3) gesteuert wird.

6. Verfahren nach einem der vorhergehenden Ansprüche, **dadurch gekennzeichnet, dass** die Steuerung der Stellungen der Klappen (V1-V3) und der Geschwindigkeit der Gebläsemotorgruppe (GMV) von einer Verteilungsanforderung abhängt, die einen zu einem hinteren Bedienungsfeld gehörenden Durchsatzbefehl enthält.

7. Verfahren nach Anspruch 1, **dadurch gekennzeichnet, dass** die Steuerung der Stellungen der Klappen (V1-V3) und der Geschwindigkeit der Gebläsemotorgruppe (GMV) von einer Verteilungsanforderung (Q1-Q3) abhängt.

**8.** Vorrichtung zum Steuern des Durchsatzes einer Fahrzeug-Klimaanlage, die einlassseitig eine Gebläsemotorgruppe (GMV) und auslassseitig mehrere Leitungen (CD), denen Klappen (V1-V3) mit einstellbaren Stellungen zugeordnet sind, aufweist, **dadurch gekennzeichnet, dass** sie Auswertungsmittel (MEL), die äquivalente Querschnitte (SE) berechnen können, die den verschiedenen Leitungen zugeordnet sind, und Mittel (MCTL) zum Steuern der Stellungen der Klappen und der Geschwindigkeit der Gebläsemotorgruppe anhand dieser äquivalenten Querschnitte (SE) enthält.

**9.** Vorrichtung nach Anspruch 8, **dadurch gekennzeichnet, dass** die Auswertungsmittel erste Mittel zum Berechnen der Dichten der Leitungen enthalten, wobei die Dichte einer Leitung das Verhältnis zwischen der Durchsatzanforderung für diese Leitung als Prozentsatz des Gesamtdurchsatzes (Q1-Q3) und der Kapazität der Leitung, die durch ihre maximale äquivalente Fläche ($SE_{max}$) repräsentiert wird, ist.

**10.** Vorrichtung nach Anspruch 9, **dadurch gekennzeichnet, dass** die Auswertungsmittel außerdem Mittel zum Bestimmen der Leitung, die die höchste Dichte hat, und zweite Rechenmittel, die die äquivalenten Querschnitte (SE) als Funktionen der maximalen äquivalenten Querschnitte ($SE_{max}$) und einer Verteilungsanforderung (Q1-Q3) berechnen können, enthalten.

**11.** Vorrichtung nach Anspruch 10, **dadurch gekennzeichnet, dass** die Steuermittel die Klappe, die der Leitung zugeordnet ist, die die höchste Dichte aufweist, maximal öffnen können und die Stellung jeder der Klappen, die den anderen Leitungen zugeordnet sind, als Funktion der Verteilungsanforderung (Q1-Q3) steuern können.

**12.** Vorrichtung nach einem der Ansprüche 8 bis 11, **dadurch gekennzeichnet, dass** die Auswertungsmittel (MEL) die äquivalenten Querschnitte (SE), die den verschiedenen Leitungen zugeordnet sind, als Funktion einer Verteilungsanforderung berechnen können, die einen zu einem hinteren Bedienungsfeld gehörenden Durchsatzbefehl enthält.

**13.** Vorrichtung nach Anspruch 8, **dadurch gekennzeichnet, dass** die Auswertungsmittel (MEL) die äquivalenten Querschnitte (SE), die den verschiedenen Leitungen zugeordnet sind, als Funktion einer Verteilungsanforderung (Q1-Q3) berechnen können.

**14.** Fahrzeug, das eine Klimaanlage enthält, die so ausgelegt ist, dass sie einen Fahrgastraum des Fahrzeugs klimatisieren kann, **dadurch gekennzeichnet, dass** die Anlage eine Durchsatzsteuervorrichtung nach einem der Ansprüche 1 bis 7 enthält oder dass die Steuerung des Durchsatzes der Auslässe der Vorrichtung gemäß einem Verfahren nach einem der Ansprüche 8 bis 13 gesteuert wird.

**EP 1 375 212 B1**

## RÉFÉRENCES CITÉES DANS LA DESCRIPTION

**Documents brevets cités dans la description**

- EP 0495201 A